(19) Europäisches Patentamt
European Patent Office
Office européen des brevets

(11) **EP 4 078 121 B1**

(12) **EUROPÄISCHE PATENTSCHRIFT**

(45) Veröffentlichungstag und Bekanntmachung des Hinweises auf die Patenterteilung:
**20.09.2023 Patentblatt 2023/38**

(21) Anmeldenummer: **20817280.9**

(22) Anmeldetag: **01.12.2020**

(51) Internationale Patentklassifikation (IPC):
*G01K 7/42* (2006.01)  *G01K 7/02* (2021.01)
*G01K 7/16* (2006.01)  *G01K 13/02* (2021.01)

(52) Gemeinsame Patentklassifikation (CPC):
**G01K 7/02; G01K 7/16; G01K 7/42; G01K 13/02**

(86) Internationale Anmeldenummer:
**PCT/EP2020/084061**

(87) Internationale Veröffentlichungsnummer:
**WO 2021/121954 (24.06.2021 Gazette 2021/25)**

(54) **THERMOMETER MIT KOMPENSATIONSFUNKTION**

THERMOMETER HAVING A COMPENSATION FUNCTION

THERMOMÈTRE AYANT UNE FONCTION DE COMPENSATION

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **16.12.2019 DE 102019134603**

(43) Veröffentlichungstag der Anmeldung:
**26.10.2022 Patentblatt 2022/43**

(73) Patentinhaber: **Endress+Hauser Wetzer GmbH+Co. KG**
**87484 Nesselwang (DE)**

(72) Erfinder: **SCHALLES, Marc**
**99097 Erfurt (DE)**

(74) Vertreter: **Koslowski, Christine Adelheid**
**Endress+Hauser Group Services**
**(Deutschland) AG+Co. KG**
**Colmarer Straße 6**
**79576 Weil am Rhein (DE)**

(56) Entgegenhaltungen:
**DE-A1-102014 119 593     DE-A1-102018 116 309**

**Beschreibung**

Die Erfindung bezieht sich auf eine Zustandsüberwachung für ein Thermometer

Thermometer sind in unterschiedlichsten Ausgestaltungen aus dem Stand der Technik bekannt geworden. So gibt es Thermometer, welche zur Messung der Temperatur die Ausdehnung einer Flüssigkeit, eines Gases oder eines Festkörpers mit bekanntem Ausdehnungskoeffizienten heranziehen, oder auch solche, welche die elektrische Leitfähigkeit eines Materials oder eine davon abgeleitete Größe mit der Temperatur in Zusammenhang bringen, wie beispielsweise den elektrischen Widerstand bei Verwendung von Widerstandelementen oder den thermoelektrischen Effekt im Falle von Thermoelementen. Dagegen wird bei Strahlungsthermometern, insb. Pyrometern, zur Bestimmung der Temperatur einer Substanz deren Wärmestrahlung ausgenutzt. Die jeweils zugrundeliegenden Messprinzipien sind jeweils in einer Vielzahl von Veröffentlichungen beschrieben worden.

Bei einem Temperatursensor in Form eines Widerstandelements sind unter anderem sogenannte Dünnschicht- und Dickschicht-Sensoren sowie sogenannte Heißleiter (auch als NTC-Thermistoren bezeichnet) bekannt geworden. Bei einem Dünnschicht-Sensor, insbesondere einem Resistance Temperature Detector (RTD), kommt beispielsweise ein mit Anschlussdrähten versehenes und auf ein Trägersubstrat aufgebrachtes Sensorelement zum Einsatz, wobei die Rückseite des Trägersubstrats in der Regel metallisch beschichtet ist. Als Sensorelemente werden sogenannte Widerstandselemente, welche beispielsweise durch Platinelemente gegeben sind, verwendet, die unter anderem unter den Bezeichnungen PT10, PT100, und PT1000 auch kommerziell erhältlich sind.

Bei Temperatursensoren in Form von Thermoelementen wiederum wird die Temperatur durch eine Thermospannung bestimmt, die zwischen den einseitig angeschlossenen Thermodrähten aus unterschiedlichen Materialien entsteht. Zur Temperaturmessung werden üblicherweise Thermoelemente nach DIN-Norm IEC584, z.B. Thermoelemente vom Typ K, J, N, S, R, B, T oder E, als Temperaturfühler eingesetzt. Aber auch andere Materialpaare, insbesondere solche mit einem messbaren Seebeck-Effekt, sind möglich.

Die Aufgabe von Thermometern in der Prozessautomatisierung besteht darin, die Temperatur eines Mediums, bzw. eines Prozessmediums, zuverlässig und möglichst genau zu bestimmen. In der Praxis besteht hierbei das Problem, dass der jeweils verwendete Temperatursensor durch mehrere thermische Widerstände vom Medium getrennt ist. Diese kommen beispielsweise durch die einzelnen Komponenten des Thermometers, sowie ggf. durch das Behältnis, in welchen sich das Medium befindet, beispielsweise ein Behälter oder eine Rohrleitung, zustande. Häufig ist der Temperatursensor Teil eines sog. Messeinsatzes, welcher ein Mantelelement, welches einen Füllstoff und den darin eingebetteten Temperatursensor umgibt, umfasst. In diesem Falle ergeben sich serielle thermische Widerstände beispielsweise durch den Mantel und den Füllstoff.

Umfasst das Thermometer ferner beispielsweise ein Schutzrohr, so kommen weitere serielle thermische Widerstände durch das Schutzrohr selbst, sowie die thermische Kopplung zwischen dem Schutzrohr und dem Messeinsatz zustande. Eine entscheidende Rolle bei der Erreichung eines thermischen Ausgleichs zwischen dem Prozessmedium und der Umgebung bzw. dem Thermometer spielt die Wahl der Länge des Schutzrohrs und des Messeinsatzes. Ist/sind das Schutzrohr und/oder der Messeinsatz zu kurz, so kann es dazu kommen, dass im Bereich des Temperatursensors ein Temperaturgradient auftritt. Ein solcher Temperaturgradient hängt einerseits von der Differenz der Temperatur des Mediums bzw. der Prozesstemperatur und der Umgebungstemperatur ab. Andererseits spielen aber auch die Wärmeleitfähigkeiten der jeweils verwendeten Komponenten des Thermometers, der thermischen Kopplungen zwischen den einzelnen Komponenten sowie unterschiedliche Prozessparameter, wie beispielsweise eine Durchflussgeschwindigkeit des Prozessmediums o. ä. eine entscheidende Rolle.

Eine weitere Ursache für das Auftreten von Temperaturgradienten im Bereich des Temperatursensors liegt in der Bildung von Ablagerungsschichten und/oder Korrosion am Thermometer, beispielsweise am Schutzrohr oder Messeinsatz, insbesondere im Bereich des Temperatursensors. Das Bilden von Ablagerungen oder das Auftreten von Korrosion führt zu einer Veränderung, insbesondere einer Verschlechterung, der thermischen Kopplung zwischen dem Medium und der jeweils mit dem Medium in Kontakt kommenden Komponente des Thermometers, beispielsweise dem Schutzrohr oder Mantelelement.

Die vorangegangenen Überlegungen gelten analog auch für den Fall, dass es sich bei dem Thermometer um ein nicht-invasives Thermometer handelt, welches auf eine Wandung des Behältnisses aufgebracht wird.

Unabhängig von der Ausgestaltung des Thermometers können auftretende, unerwünschte Temperaturgradienten im Bereich des Temperatursensors unabhängig von der exakten Ursache zu erheblichen Messwertverfälschungen führen.

Um derartige Messwertverfälschungen zu vermeiden, ist es beispielsweise bekannt geworden, anhand von drei äquidistanten Temperatursensoren den wahren Temperaturwert zu bestimmen (Klaus Irrgang, Lothar Michalowsky:
Temperaturmesspraxis, ISBN-13: 978380272204). Dieses Vorgehen erfordert allerdings eine vergleichsweise komplexe Konstruktion und Signalauswertung.

Aus der DE102014119593A1 ist ein Thermometer bekannt geworden, dass die Detektion eines Temperaturgradienten entlang der Anschlussleitungen ermöglicht. Als Temperatursensor kommt ein Widerstandselement in der sog. 4-Leiterschaltung zum Einsatz. An einem der Anschlussdrähte wird ein Stück der Anschlussleitung durch ein anderes Material ersetzt, so dass aus dieser und einer weiteren Anschlussleitung ein Differenzthermoelement gebildet wird. Sobald an dem aus zwei Elementen bzw. zwei Materialien bestehenden Anschlussdraht ein Temperaturgradient auftritt, entsteht eine Thermospannung, die Aufschluss über den Temperaturgradienten entlang der Anschlussdrähte gibt. Dieser Temperaturgradient betrifft aber lediglich den Verlauf der Anschlussdrähte. Über etwaige direkt im Bereich des Temperatursensors auftretende Temperaturgradienten können keine direkten Aussagen getätigt werden.

Die bisher unveröffentlichte Patentanmeldung mit dem Aktenzeichen 102018116309.6 offenbart ein Thermometer, welches einen Temperatursensor mit einem temperaturempfindlichen Sensorelement, welches über zumindest eine erste und eine zweite Anschlussleitung elektrisch kontaktiert ist aufweist. Die erste Anschlussleitung ist in einen ersten und einen zweiten Abschnitt unterteilt, wobei der erste dem Sensorelement zugewandte Abschnitt aus einem ersten Material besteht, und wobei der zweite dem Sensorelement abgewandte Abschnitt aus einem zweiten sich von dem ersten unterscheidenden Material besteht, während die zweite Anschlussleitung ebenfalls aus dem zweiten Material besteht. Der erste Abschnitt der ersten Anschlussleitung und zumindest ein Teil der zweiten Anschlussleitung bilden dann einen ersten Differenz-Temperatursensor in Form eines Thermoelements, bei welchem es sich um einen Wärmestromsensor nach dem thermoelektrischen Prinzip handelt. Auf diese Weise ist ein Temperaturgradient bzw. Wärmestrom am Ort des Temperatursensors erfassbar. Auf diese Anmeldung wird im Folgenden vollumfänglich Bezug genommen.

Ausgehend von der Problematik unerwünschter Temperaturgradienten im Bereich des Temperatursensors liegt der vorliegenden Erfindung die Aufgabe zugrunde, ein Thermometer mit möglichst hoher Messperformance, insbesondere mit hoher Messgenauigkeit, anzugeben.

Diese Aufgabe wird gelöst durch das Verfahren gemäß Anspruch 1. Vorteilhafte Ausgestaltungen sind jeweils in den abhängigen Ansprüchen angegeben.

Bei dem erfindungsgemäßen Verfahren handelt es sich um ein Verfahren zur Bestimmung und/oder Überwachung der Temperatur eines Mediums mittels eines

Thermometers mit zumindest einem Temperatursensor, wobei der Temperatursensor ein temperaturempfindliches Sensorelement aufweist, welches über zumindest eine erste Anschlussleitung und eine zweite Anschlussleitung elektrisch kontaktiert ist, wobei die erste Anschlussleitung in einen ersten und einen zweiten Abschnitt unterteilt ist, wobei der erste dem Sensorelement zugewandte Abschnitt aus einem ersten Material besteht, und wobei der zweite dem Sensorelement abgewandte Abschnitt aus einem zweiten sich von dem ersten unterscheidenden Material besteht, wobei die zweite Anschlussleitung aus dem zweiten Material besteht und wobei der erste Abschnitt der ersten Anschlussleitung und zumindest ein Teil der zweiten Anschlussleitung einen ersten Differenz-Temperatursensor in Form eines Thermoelements bilden, das Verfahren umfassend folgende

Verfahrensschritte:

Ermitteln eines Messwerts für die Temperatur des Mediums mittels des Temperatursensors,
Ermitteln eines Wärmestroms, insbesondere einer Wärmeableitung, oder einer mit dem Wärmestrom in Verbindung stehende Größe, beispielsweise eine vom Wärmestrom abgeleitete Größe, oder eine den Wärmestrom repräsentierende Größe, im Bereich des
Temperatursensors, wobei der Wärmestrom oder der mit dem Wärmestrom in Verbindung stehende Größe mittels zumindest des ersten Diffenrenz-Temperatursensor bestimmt wird, und
Bestimmen einer Messwertabweichung für den Messwert für die Temperatur aus dem ermittelten Wärmestrom, insbesondere einer Wärmeableitung, oder einer mit dem Wärmestrom in Verbindung stehenden Größe, beispielsweise einer vom Wärmestrom abgeleiteten Größe, oder einer den Wärmestrom repräsentierenden Größe, anhand eines Modells für eine Wärmeableitung im Bereich des Temperatursensors. wobei es sich bei dem Modell um ein parametrisches Modell handelt.

Das erfindungsgemäße Verfahren erlaubt somit die Korrektur, Justage und/oder Kompensation von den jeweils mittels des Temperatursensors ermittelten Messwerten in Bezug auf unerwünschte Temperaturgradienten, die im Bereich des Temperatursensors auftreten können. In diesem Zusammenhang ist es möglich, jeweils einen kompensierten Wert für die Temperatur des Mediums auszugeben. Zur Kompensation kann die ermittelte Messwertabweichung zu dem ermittelten Temperaturmesswert mit umgekehrten Vorzeichen hinzuaddiert werden. Zur Bestimmung der Messwertabweichung wird ein Wärmestrom im Bereich des Temperatursensors oder eine mit diesem Wärmestrom in Zusammenhang stehende Größe, beispielsweise eine vom Wärmestrom abgeleitete Größe, oder eine den Wärmestrom repräsentierende Größe, beispielsweise eine Spannung, ermittelt und anhand eines geeigneten Modells hieraus eine Messwertabweichung für die Temperaturmesswerte bestimmt. Der Wärmestrom kann mittels einer separaten Vorrichtung oder mittels des für die Temperaturbestimmung und/oder -überwachung verwendeten Thermometers ermittelt werden.

In einer Ausgestaltung des Verfahrens wird anhand der ermittelten Messwertabweichung ein Zustandsindikator für das Thermometer bestimmt. In diesem Fall handelt es sich also um ein Verfahren, welches ebenfalls der Zustandsüberwachung der zur Bestimmung und/oder Überwachung der Temperatur verwendeten Vorrichtung dient. Bei dem Zustandsindikator handelt es sich um eine Aussage über den Zustand der Vorrichtung, beispielsweise ein Defekt im Bereich der Vorrichtung.

Das Verfahren kann beispielweise mittels einer Vorrichtung durchgeführt werden, wie sie in der bereits erwähnten deutschen Patentanmeldung mit dem Aktenzeichen 102018116309.6 beschrieben worden ist.

Erfindungsgemäß wird der Wärmestrom mittels des Differenz-Temperatursensors bestimmt.

In dieser Hinsicht sei darauf verwiesen, dass eine entsprechende Vorrichtung im Falle, dass mehr als zwei Anschlussleitungen vorhanden sind, auch über mehrere Differenz-Temperatursensoren verfügen kann und dass in diesem Falle einer oder mehrere der Differenz-Temperatursensoren zur Bestimmung des Wärmestromes herangezogen werden können.

In einer Ausgestaltung des Verfahrens wird der Zustandsindikator anhand eines Vergleichs der ermittelten Messwertabweichung mit einem Referenzwert für die Messwertabweichung ermittelt. Der Referenzwert kann sich beispielsweise auf einen Wert für die Messwertabweichung beziehen, welcher sich auf konstruktiv bedingte Temperaturgradienten im Bereich des Temperatursensors bezieht. Eine Abweichung der Messwertabweichung von dem Grenzwert lässt dann einen Rückschluss auf solchen Gradienten zu, die im Laufe der Zeit während des Betriebs des Thermometers im Prozess entstehen.

In diesem Zusammenhang ist es demnach von Vorteil, wenn der Referenzwert für die Messwertabweichung am Prozess, vorzugsweise bei Inbetriebnahme des Thermometers im Prozess, insbesondere experimentell, bestimmt wird.

Es ist ebenfalls von Vorteil, wenn im Falle, dass eine Differenz zwischen der ermittelten Messwertabweichung und dem Referenzwert einen vorgebbaren Grenzwert über- oder unterschreitet, eine Aussage über den Zustand der Vorrichtung gemacht wird. Beispielsweise kann auf eine Veränderung der Prozess- und/oder Messbedingungen rückgeschlossen werden.

In einer Ausgestaltung des Verfahrens handelt es sich bei dem Zustandsindikator im Falle einer invasiven Temperaturbestimmung und/oder -überwachung um eine Aussage über eine Einbaubedingung, das Auftreten von Korrosion, oder einer Belagsbildung und im Falle einer nicht-invasiven Temperaturbestimmung und/oder -überwachung um eine Aussage über eine thermische Kopplung zwischen dem Thermometer und einem das Medium enthaltenden Behältnisses.

Es ist aber ebenso denkbar, dass es sich bei dem Zustandsindikator um eine Aussage über eine Änderung bzw. einen Wechsel des Mediums, um eine Änderung einer Strömungsgeschwindigkeit des Mediums, oder im Falle einer bekannten Umgebungstemperatur um einen Eigenerwärmungsfehler im Bereich des Temperatursensors handelt.

Für die jeweiligen Aussagen über den Zustand der Vorrichtung sind ggf. zusätzliche Informationen über den Prozess oder die Prozessumgebung erforderlich. In dieser Hinsicht nützlich ist beispielsweise eine Kenntnis über ein Temperaturintervall für den jeweiligen Prozess, also über zu erwartende Änderungen der Prozesstemperatur, über die Umgebungstemperatur oder einen anderen Umgebungsparameter, über Änderungen der Einbaubedingungen des Thermometers, insbesondere das Vorhandensein einer thermischen Isolation, Typ und Material des Behältnisses, über die, insbesondere physikalischen und/oder chemischen Eigenschaften des Mediums, den jeweiligen Medientyp oder Veränderungen des jeweiligen Mediums, oder auch über Änderungen einer Strömungsgeschwindigkeit des Mediums.

Für eine umfassende Zustandsüberwachung kann es ferner vorteilhaft sein, wenn mehrere Differenz-Temperatursensoren vorhanden sind, mittels welchen eine ortsaufgelöste Bestimmung des Wärmestroms im Bereich der Vorrichtung möglich ist. Dies kann insbesondere auch dazu helfen, zwischen mehreren möglichen Ursachen für einen auftretenden Temperaturgradienten zu unterscheiden.

In einer Ausgestaltung weist das parametrische Modell insbesondere zumindest einen statischen und einen dynamischen Term zur Bestimmung der Messwertabweichung auf.

Eine weitere Ausgestaltung beinhaltet, dass mittels des Modells, insbesondere anhand zumindest eines Koeffizienten für das Modell, zumindest eine Ein- oder Anbaubedingung des Thermometers an dem Behältnis, eine Prozessbedingung eines Prozesses, für welchen das Thermometer eingesetzt wird, ein Parameter oder eine andere das Thermometer betreffende, charakteristische Größe, eine weitere Prozessgröße des Mediums, insbesondere eine Durchflussgeschwindigkeit, eine Umgebungsbedingung, insbesondere eine Umgebungstemperatur oder ein Umwelteinfluss für das Thermometer oder eine Information über das Medium, insbesondere eine physikalische und/oder chemische Eigenschaft des Mediums, berücksichtigt wird.

Noch eine Ausgestaltung beinhaltet, dass zumindest ein Koeffizient des Modells analytisch oder numerisch bestimmt wird. Beispielsweise können geeignete Formeln für den jeweiligen Koeffizienten hinterlegt sein. Zur Bestimmung derartiger Koeffizienten kann die Eingabe von zumindest einem Messwert, welche auch mittels andere für den jeweiligen Prozess eingesetzter Messvorrichtungen bestimmt werden kann, erfordern. Werte für die Koeffizienten können aber auch mittels einer Regression oder Simulation bestimmt werden.

In einer Ausgestaltung wird zumindest ein Koeffizient anhand einer Referenzmessung mittels einer Referenzvorrichtung in einem Referenzmedium bestimmt. In diesem Falle kann insbesondere eine Abweichung von der Referenz ermittelt werden.

Die Erfindung wird anhand der nachfolgenden Zeichnungen näher erläutert. Es zeigt:

Fig. 1: eine schematische Darstellung eines Thermometers gemäß Stand der Technik mit einem Temperatursensor in Form eines Widerstandselements, und

Fig. 2: beispielhafte Ausgestaltung eines Thermometers mit einem Differenz-Temperatursensor zur Bestimmung des Wärmestroms.

In den Figuren sind gleiche Merkmale mit gleichen Bezugzeichen gekennzeichnet.

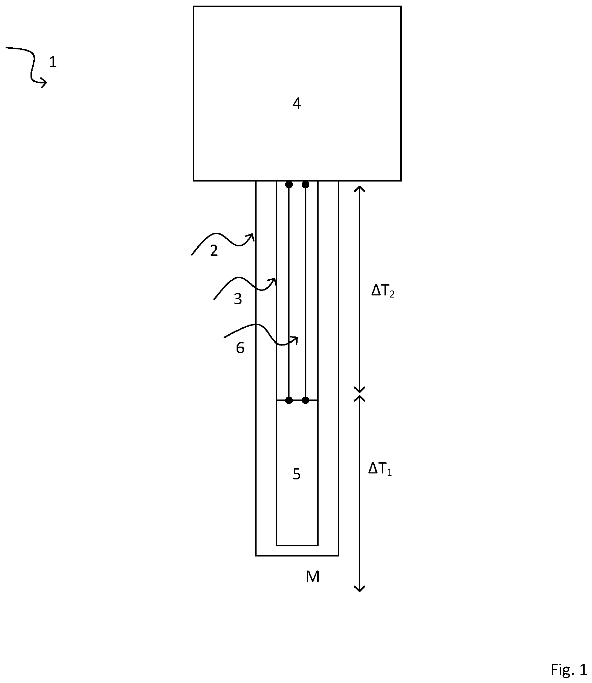

In Fig.1 ist eine schematische Abbildung eines Thermometers 1 mit einem Eintauchkörper 2, beispielsweise einem Schutzrohr, einem Messeinsatz 3, und einer Elektronik 4 gemäß Stand der Technik gezeigt. Der Messeinsatz 3 ist in den Eintauchkörper 2 eingebracht und umfasst einen Temperatursensor 5, welcher im vorliegenden Fall ein temperatursensitives Element in Form eines Widerstandselements umfasst. Der Temperatursensor ist über die Anschlussleitungen 6 elektrisch kontaktiert und mit der Elektronik 4 verbunden. In anderen Ausgestaltungen kann die Elektronik 4 auch separat vom Messeinsatz 3 und Eintauchkörper 2 angeordnet sein. Auch muss es sich bei dem Sensorelement 5 nicht notwendigerweise um ein Widerstandselement handeln, oder die Anzahl der verwendeten Anschlussleitungen 6 muss nicht notwendigerweise zwei betragen. Vielmehr kann die Anzahl der Anschlussleitungen 6 je nach angewendetem Messprinzip und verwendetem Temperatursensor passend gewählt werden.

Wie bereits dargelegt, hängt die Messgenauigkeit eines Thermometers 1 in hohem Maße von den jeweiligen Materialien und, insbesondere thermischen, Kontaktierungen, insbesondere im Bereich des Temperatursensors 5 ab. Der Temperatursensor 5 steht mittelbar, d.h. über den Eintauchkörper 2, mit dem Medium M in thermischem Kontakt. Der Temperatursensor 5 ist also durch mehrere thermische Widerstände vom Medium M getrennt. Es kann deshalb je nach Prozessbedingungen und/oder der jeweiligen konstruktiven Ausgestaltung des Thermometers dazu kommen, dass zwischen dem Medium M und dem Thermometer zumindest zeitweise und/oder teilweise kein thermisches Gleichgewicht herrscht. In Folge des Fehlens eines thermischen Gleichgewichts können beispielsweise im Bereich des Temperatursensors 5 oder auch entlang der Anschlussleitungen 6 Temperaturgradienten $\Delta T_1$ oder $\Delta T_2$ entstehen, die aufgrund resultierender Wärmeströme die jeweils mit dem Temperatursensor 5 gemessenen Temperaturwerte verfälschen.

Besonders relevant sind in diesem Zusammenhang Temperaturgradienten $\Delta T_1$ im Bereich des Temperatursensors 5. Die vorliegende Erfindung ermöglicht deshalb die Detektion solcher Temperaturgradienten. Dies führt zu einer deutlich verbesserten Messgenauigkeit des Thermometers.

Dieselben Überlegungen gelten analog für ein Thermometer zur nicht-invasiven Bestimmung und/oder Überwachung der Temperatur.

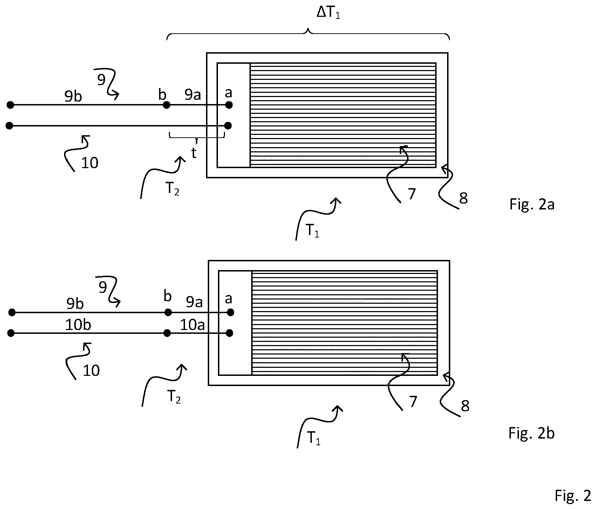

In Fig. 2 sind mögliche, beispielhafte Ausgestaltungen eines Thermometers mit einem Differenz-Temperatursensor $T_2$ zur Bestimmung des Wärmestroms gezeigt. Ein Temperatursensor $T_1$ in Form eines auf ein Substrat 8 aufgebrachten Widerstandselements 7 dient der Bestimmung und/oder Überwachung der Temperatur T des Mediums M. Der Temperatursensor $T_1$ ist mittels der beiden Anschlussleitungen 9 und 10 elektrisch kontaktiert und wird somit in der sogenannten Zweileiter-Schaltung betrieben. Im vorliegenden Falle sind beide Anschlussleitungen 9 und 10 direkt an das Widerstandselement 7 angebracht. Es sei aber an dieser Stelle darauf verwiesen, dass grundsätzlich alle dem Fachmann bekannten Kontaktierungen zur Verbindung des Temperatursensors $T_1$ mit den Anschlussleitungen 9 und 10 möglich sind.

Die erste Anschlussleitung 9 ist in einen ersten 9a und einen zweiten Abschnitt 9b unterteilt. Der erste Abschnitt 9a besteht dabei aus einem ersten Material, und der zweite Abschnitt 9b sowie die zweite Anschlussleitung 10 bestehen aus einem zweiten sich vom ersten unterscheidenden Material. Auf diese Weise bilden der erste Abschnitt 9a der ersten Anschlussleitung 9 und zumindest ein Teil t der zweiten Anschlussleitung 10 einen ersten Differenz-Temperatursensor $T_2$ in Form eines Thermoelements. Die beiden Materialien für den ersten Abschnitt 9a der ersten Anschlussleitung 9 und den zweiten Abschnitt 9b der ersten Anschlussleitung sowie für die zweite Anschlussleitung 10 werden derart gewählt, dass aufgrund einer Temperaturdifferenz zwischen den Punkten a und b, und den sich entsprechend aufgrund des thermoelektrischen Effekts in den Abschnitten 9a und t ausbildenden unterschiedlichen Thermospannungen, mittels $T_2$ eine Thermospannung detektierbar ist.

Der erste Abschnitt 9a der ersten Anschlussleitung 9 ist bevorzugt kurz im Vergleich zur Gesamtlänge der ersten Anschlussleitung 9, beispielsweise liegt die Länge des ersten Abschnitts 9a der ersten Anschlussleitung 9 im Bereich von wenigen Millimetern oder Zentimetern. Auf diese Weise kann sichergestellt werden, dass die mittels des ersten Differenz-Temperatursensors $T_2$ ermittelten Werte möglichst einen Temperaturgradienten $\Delta T_1$ im Bereich des Temperatursensors $T_1$ wiederspiegeln.

Bei dem in Fig. 2a gezeigten Beispiel sind die erste 9 und zweite Anschlussleitung 10 separat an das Widerstandselement angebracht. Der erste Abschnitt 9a der ersten Anschlussleitung 9 und der Teil t der zweiten Anschlussleitung 10 sind also mittelbar über das Widerstandselement 7 verbunden. In einer anderen Ausgestaltung könnte der erste Abschnitt 9a der ersten Anschlussleitung 9 und der Teil t der zweiten Anschlussleitung 10 aber auch direkt miteinander verbunden und dann an den Temperatursensor $T_1$ angebracht sein. Es versteht sich ferner von selbst, dass anstelle des hier für alle Fi-

guren beispielhaft gezeigten Temperatursensors $T_1$ mit einem Sensorelement in Form eines Widerstandselements 7 auch andere dem Fachmann wohlbekannte Temperatursensoren zum Einsatz kommen können.

In der in Fig. 2b gezeigten Ausgestaltung ist auch die zweite Anschlussleitung 10 in einen ersten 10a und einen zweiten Abschnitt 10b unterteilt. Der erste Differenz-Temperatursensor $T_2$ ist in diesem Fall durch die ersten Abschnitte 9a und 10a der ersten 9 und zweiten 10 Anschlussleitungen gebildet. Gemäß Fig. 2b, aber nicht notwendigerweise, sind die beiden ersten Abschnitte 9a und 10a der beiden Anschlussleitungen 9 und 10 gleich lang. Bei den zweiten Abschnitten 9b und 10b der ersten 9 und zweiten 10 Anschlussleitungen handelt es sich in diesem Fall um, vorzugsweise gleichartig ausgestaltete, Verlängerungsdrähte. Aber auch im Falle der Ausgestaltung gemäß Fig. 2a ist es von Vorteil, wenn der zweite Abschnitt 9b der ersten Anschlussleitung 9 und die zweite Anschlussleitung 10 gleichartig ausgestaltet sind.

Mittels des erfindungsgemäßen Verfahrens wird nun mittels des Differenz-Temperatursensors $T_2$ ein Wärmestrom W ermittelt und ein geeignetes Modell MOD für die Wärmeableitung bereitgestellt, mittels welcher eine Messwertabweichung $\delta T$ aufgrund des Temperaturgradienten $\Delta T$ bestimmbar ist. Mittels der Messwertabweichung $\delta T$ lassen sich die mittels des Temperatursensors $T_1$ ermittelten Messwerte korrigieren und/oder justieren, also Messfehler kompensieren und/oder es kann eine Zustandsüberwachung des Thermometers 1 durchgeführt werden.

Eine Möglichkeit für ein entsprechendes Modell ist gegeben durch ein parametrisches Modell, bei welchem sich eine kompensierte Temperatur $T_{ks}$ des Mediums aus mehreren Termen zusammensetzt, wie zum Beispiel:

$$T_{ks} = T + k_1 + k_2 W + k_3 \frac{dT}{dW}$$

Hier sind $k_1$-$k_3$ Koeffizienten des Modells MOD, welche beispielsweise numerisch, analytisch oder experimentell ermittelbar sind. Mit dem Modell MOD lassen sich somit statisch-thermische und dynamisch-thermische Messwertabweichungen mittels einer Regression $\Sigma(T_{ks} - T_M)^2 \to 0$, wobei $T_M$ der Temperatur des Mediums M ohne den Effekt eines Temperaturgradienten im Bereich des Temperatursensors entspricht.

Eine Alternative für ein geeignetes Modell MOD ist beispielsweise eines, in welchem eine zeitliche Variation der Messwertabweichung $\delta T$ berücksichtigt wird, wie z. B.:

$$T_{ks} = T + k_1 + k_2 W + k_3 \frac{dT}{dt}$$

Es sei darauf verwiesen, dass neben den beiden beispielhaften, hier angegebenen Modellen zahlreiche weitere Modelle MOD gebildet werden können, welche ebenfalls unter die vorliegende Erfindung fallen. Beispielsweise kann anstelle des Wärmestroms auch eine den Wärmestrom repräsentierende, andere Größe, insbesondere Messgröße, beispielsweise eine Spannung, für das Modell MOD verwendet werden.

## Bezugszeichenliste

| | |
|---|---|
| 1 | Thermometer |
| 2 | Eintauchkörper |
| 3 | Messeinsatz |
| 4 | Elektronik |
| 5 | Sensorelement |
| 6 | Anschlussdrähte |
| 7 | Widerstandselement |
| 8 | Substrat |
| 9-10 | Erste, zweite Anschlussleitung |
| 9a-10a | erste Abschnitte der Anschlussleitungen |
| 9b-10b | zweite Abschnitte der Anschlussleitungen |
| M | Medium |
| T | Temperatur |
| $T_1$ | Temperatursensor |
| $\Delta T_1$ | Temperaturgradient |
| $T_2$ | Differenz-Temperatursensor |
| $\delta T$ | Messwertabweichung |
| $T_M$ | Temperatur Medium M ohne Temperaturgradient |
| $T_{ks}$ | Kompensierte Temperatur |
| MOD | Modell für die Wärmeableitung |
| k, $k_1$-$k_3$ | Koeffizienten des Modells MOD |

## Patentansprüche

1. Verfahren zur Bestimmung und/oder Überwachung der Temperatur (T) eines Mediums (M) mittels eines Thermometers (1) mit zumindest einem Temperatursensor ($T_1$), wobei der Temperatursensor ($T_1$) ein temperaturempfindliches Sensorelement aufweist, welches über zumindest eine erste Anschlussleitung (9) und eine zweite Anschlussleitung (10) elektrisch kontaktiert ist, wobei die erste Anschlussleitung (9) in einen ersten (9a) und einen zweiten Abschnitt (9b) unterteilt ist, wobei der erste dem Sensorelement zugewandte Abschnitt (9a) aus einem ersten Material besteht, und wobei der zweite dem Sensorelement abgewandte Abschnitt (9b) aus einem zweiten sich von dem ersten unterscheidenden Material besteht, wobei die zweite Anschlussleitung (10) aus dem zweiten Material besteht und wobei der erste Abschnitt der ersten Anschlussleitung (9a) und zumindest ein Teil der zweiten Anschlussleitung (10) einen ersten Differenz-Temperatursensor ($T_2$) in

Form eines Thermoelements bilden, das Verfahren umfassend folgende Verfahrensschritte:

Ermitteln eines Messwerts für die Temperatur (T) des Mediums mittels des Temperatursensors ($T_1$), Ermitteln eines Wärmestroms (W), insbesondere einer Wärmeableitung, oder einer mit dem Wärmestrom (W) in Verbindung stehende Größe beispielsweise eine vom Wärmestrom (W) abgeleitete Größe, oder eine der Wärmestrom (W) repräsentierende Größe, im Bereich des Temperatursensors ($T_1$), wobei der Wärmestrom (W) oder die mit dem Wärmestrom (W) in Verbindung stehende Größe mittels zumindest des ersten Differenz-Temperatursensors ($T_2$) bestimmt wird, und Bestimmen einer Messwertabweichung ($\delta T$) für den Messwert für die Temperatur (T) aus dem ermittelten Wärmestrom (W), insbesondere einer Wärmeableitung, oder einer mit dem Wärmestrom (W) in Verbindung stehenden Größe, beispielsweise einer vom Wärmestrom (W) abgeleiteten Größe, oder einer den Wärmestrom (W) repräsentierenden Größe, anhand eines Modells (MOD) für eine Wärmeableitung im Bereich des Temperatursensors ($T_1$), wobei es sich bei dem Modell (MOD) um ein parametrisches Modell handelt.

2. Verfahren nach Anspruch 1,
wobei anhand der ermittelten Messwertabweichung ($\delta T$) ein Zustandsindikator für das Thermometer (1) bestimmt wird.

3. Verfahren nach zumindest einem der vorherigen Ansprüche,
wobei der Zustandsindikator anhand eines Vergleichs der ermittelten Messwertabweichung ($\delta T$) mit einem Referenzwert für die Messwertabweichung ($\delta T$) ermittelt wird.

4. Verfahren nach Anspruch 3,
wobei der Referenzwert für die Messwertabweichung ($\delta T$) am Prozess, vorzugsweise bei Inbetriebnahme des Thermometers (1) im Prozess, insbesondere experimentell, bestimmt wird.

5. Verfahren nach Anspruch 3 oder 4,
wobei im Falle, dass eine Differenz zwischen der ermittelten Messwertabweichung ($\delta T$) und dem Referenzwert einen vorgebbaren Grenzwert über- oder unterschreitet, eine Aussage über den Zustand des Thermometers (1) gemacht wird.

6. Verfahren nach zumindest einem der Ansprüche 2 bis 5,
wobei es sich bei dem Zustandsindikator im Falle einer invasiven Temperaturbestimmung und/oder -überwachung um eine Aussage über eine Einbaubedingung, das Auftreten von Korrosion, oder einer Belagsbildung und im Falle einer nicht-invasiven Temperaturbestimmung und/oder -überwachung um eine Aussage über eine thermische Kopplung zwischen dem Thermometer (1) und einem das Medium (M) enthaltenden Behältnisses.

7. Verfahren nach zumindest einem der Ansprüche 2 bis 6,
wobei es sich bei der Aussage um eine Aussage über eine Änderung bzw. einen Wechsel des Mediums (M), um eine Änderung einer Strömungsgeschwindigkeit des Mediums (M), einen Eigenerwärmungsfehler im Bereich des Temperatursensors ($T_1$), oder eine Änderung eines Wärmeübergangskoeffizienten handelt.

8. Verfahren nach zumindest einem der vorherigen Ansprüche,
wobei das parametrische Modell (MOD) zumindest einen statischen und einen dynamischen Term zur Bestimmung der Messwertabweichung ($\delta T$) aufweist.

9. Verfahren nach zumindest einem der vorherigen Ansprüche,
wobei mittels des Modells (MOD), insbesondere anhand zumindest eines Koeffizienten (K) für das Modell (MOD), zumindest eine Ein- oder Anbaubedingung des Thermometers (1) an dem Behältnis, eine Prozessbedingung eines Prozesses, für welchen das Thermometer (1) eingesetzt wird, ein Parameter oder eine andere das Thermometer (1) betreffende, charakteristische Größe, eine weitere Prozessgröße des Mediums (M), insbesondere eine Durchflussgeschwindigkeit, eine Umgebungsbedingung, insbesondere eine Umgebungstemperatur oder ein Umwelteinfluss für das Thermometer (1), oder eine Information über das Medium (M), insbesondere eine physikalische und/oder chemische Eigenschaft des Mediums (M), berücksichtigt wird.

10. Verfahren nach zumindest einem der vorherigen Ansprüche,
wobei zumindest ein Koeffizient (K) des Modells (MOD) analytisch oder numerisch bestimmt wird.

11. Verfahren nach zumindest einem der vorherigen Ansprüche,
wobei zumindest ein Koeffizient (K) anhand einer Referenzmessung mittels einer Referenzvorrichtung in einem Referenzmedium bestimmt wird.

Claims

1. A method for determining and/or monitoring the temperature (T) of a medium (M) by means of a thermometer (1) with at least one temperature sensor ($T_1$), wherein the temperature sensor ($T_1$) has a temperature-sensitive sensor element which is electrically contacted via at least one first connection line (9) and one second connection line (10), wherein the first connection line (9) is divided into a first section (9a) and a second section (9b), wherein the first section (9a) facing toward the sensor element consists of a first material, and wherein the second section (9b) facing away from the sensor element consists of a second material differing from the first, wherein the second connection line (10) consists of the second material and wherein the first section of the first connection line (9a) and at least part of the second connection line (10) form a first temperature difference sensor ($T_2$) in the form of a thermoelement, the method comprising the following method steps:

    ascertaining a measurement value for the temperature (T) of the medium by means of the temperature sensor ($T_1$),
    ascertaining a heat flow (W), in particular a heat dissipation, or a variable connected to the heat flow (W), for example a variable derived from the heat flow (W), or a variable representing the heat flow (W), in the area of the temperature sensor ($T_1$), wherein the heat flow (W) or the variable connected to the heat flow (W) is determined by means of at least the first temperature difference sensor ($T_2$), and
    determining a measurement value deviation ($\sigma T$) for the measurement value for the temperature (T) from the ascertained heat flow (W), in particular a heat dissipation, or a variable connected to the heat flow (W), for example a variable derived from the heat flow (W), or a variable representing the heat flow (W), by reference to a model (MOD) for a heat dissipation in the area of the temperature sensor ($T_1$), wherein the model (MOD) is a parametric model.

2. The method as claimed in claim 1,
wherein a status indicator for the thermometer (1) is determined by reference to the ascertained measurement value deviation ($\sigma T$).

3. The method as claimed in at least one of the preceding claims,
wherein the status indicator is ascertained by reference to a comparison of the ascertained measurement value deviation ($\sigma T$) with a reference value for the measurement value deviation ($\sigma T$).

4. The method as claimed in claim 3,
wherein the reference value for the measurement value deviation ($\sigma T$) is determined, in particular experimentally, in the process, preferably when the thermometer (1) is put into operation in the process.

5. The method as claimed in claim 3 or 4,
wherein, if a difference between the ascertained measurement value deviation ($\sigma T$) and the reference value is above or below a specifiable limit value, a message is provided about the state of the thermometer (1).

6. The method as claimed in at least one of claims 2 to 5, wherein, in the case of invasive temperature determination and/or temperature monitoring, the status indicator is a message about an installation condition, the occurrence of corrosion, or the formation of a deposit and, in the case of non-invasive temperature determination and/or temperature monitoring, the status indicator is a message about a thermal coupling between the thermometer (1) and a container containing the medium (M).

7. The method as claimed in at least one of claims 2 to 6, wherein the message is a message about a change or a switch of the medium (M), a change of a flow speed of the medium (M), a self-heating error in the area of the temperature sensor ($T_1$), or a change of a heat transfer coefficient.

8. The method as claimed in at least one of the preceding claims,
wherein the parametric model (MOD) has at least one static and one dynamic term for determining the measurement value deviation ($\sigma T$).

9. The method as claimed in at least one of the preceding claims,
wherein at least one installation or attachment condition of the thermometer (1) on the container, a process condition of a process for which the thermometer (1) is being used, a parameter or another characteristic variable relating to the thermometer (1), a further process variable of the medium (M), in particular a flow speed, an environmental condition, in particular an environmental temperature or an environmental influence for the thermometer (1), or information on the medium (M), in particular a physical and/or chemical property of the medium (M), is taken into consideration by means of the model (MOD), in particular by reference to at least one coefficient (K) for the model (MOD).

10. The method as claimed in at least one of the preceding claims,
wherein at least one coefficient (K) of the model (MOD) is determined analytically or numerically.

11. The method as claimed in at least one of the preceding claims,
wherein at least one coefficient (K) is determined by reference to a reference measurement by means of a reference device in a reference medium.

**Revendications**

1. Procédé destiné à la détermination et/ou à la surveillance de la température (T) d'un produit (M) au moyen d'un thermomètre (1) comportant au moins un capteur de température ($T_1$), le capteur de température ($T_1$) comportant un élément de capteur sensible à la température, lequel élément est mis en contact électrique par l'intermédiaire d'au moins une première ligne de raccordement (9) et une deuxième ligne de raccordement (10), la première ligne de raccordement (9) étant divisée en une première section (9a) et une deuxième section (9b), la première section (9a) tournée vers l'élément capteur étant constituée d'un premier matériau, et la deuxième section (9b) opposée à l'élément capteur étant constituée d'un deuxième matériau différent du premier, la deuxième ligne de raccordement (10) étant constituée du deuxième matériau, et la première section de la première ligne de raccordement (9a) et au moins une partie de la deuxième ligne de raccordement (10) formant un premier capteur de température différentiel ($T_2$) sous forme d'un thermocouple, lequel procédé comprend les étapes suivantes :

Détermination d'une valeur mesurée pour la température (T) du produit au moyen du capteur de température ($T_1$),
Détermination d'un flux de chaleur (W), notamment d'une dissipation de chaleur, ou d'une grandeur liée au flux de chaleur (W), par exemple une grandeur dérivée du flux de chaleur (W), ou une grandeur représentant le flux de chaleur (W), dans la zone du capteur de température ($T_1$), le flux de chaleur (W) ou la grandeur liée au flux de chaleur (W) étant déterminé(e) au moyen d'au moins le premier capteur de température différentiel ($T_2$), et
Détermination d'un écart de mesure ($\delta T$) pour la valeur mesurée de température (T) à partir du flux de chaleur (W) déterminé, notamment d'une dissipation de chaleur, ou d'une grandeur liée au flux de chaleur (W), par exemple une grandeur dérivée du flux de chaleur (W), ou une grandeur représentant le flux de chaleur (W), à l'aide d'un modèle (MOD) pour une dissipation de chaleur dans la zone du capteur de température ($T_1$), le modèle (MOD) étant un modèle paramétrique.

2. Procédé selon la revendication 1,
pour lequel un indicateur d'état pour le thermomètre (1) est déterminé à l'aide de l'écart de mesure ($\delta T$) déterminé.

3. Procédé selon au moins l'une des revendications précédentes,
pour lequel l'indicateur d'état est déterminé à l'aide d'une comparaison de l'écart de mesure ($\delta T$) déterminé avec une valeur de référence pour l'écart de mesure ($\delta T$).

4. Procédé selon la revendication 3,
pour lequel la valeur de référence pour l'écart de mesure ($\delta T$) est déterminée dans le process, de préférence lors de la mise en service du thermomètre (1) dans le process, notamment de manière expérimentale.

5. Procédé selon la revendication 3 ou 4,
pour lequel une information sur l'état du thermomètre (1) est donnée dans le cas où une différence entre l'écart de mesure ($\delta T$) déterminé et la valeur de référence est supérieure ou inférieure à une valeur limite prédéfinissable.

6. Procédé selon au moins l'une des revendications 2 à 5,
pour lequel l'indicateur d'état est, dans le cas d'une détermination et/ou d'une surveillance invasive de la température, une information sur une condition de montage, l'apparition de corrosion ou la formation d'un dépôt et, dans le cas d'une détermination et/ou d'une surveillance non invasive de la température, une information sur un couplage thermique entre le thermomètre (1) et un réservoir contenant le produit (M).

7. Procédé selon l'une des revendications 2 à 6,
pour lequel l'information est une information concernant une modification ou un changement du produit (M), une modification d'une vitesse d'écoulement du produit (M), une erreur d'auto-échauffement dans la zone du capteur de température ($T_1$), ou une modification d'un coefficient de transfert de chaleur.

8. Procédé selon au moins l'une des revendications précédentes,
pour lequel le modèle paramétrique (MOD) comprend au moins un terme statique et un terme dynamique pour déterminer l'écart de mesure ($\delta T$).

9. Procédé selon au moins l'une des revendications précédentes,
pour lequel, au moyen du modèle (MOD), notamment à l'aide d'au moins un coefficient (K) pour le modèle (MOD), au moins une condition de montage ou d'adaptation du thermomètre (1) sur le réservoir, une condition de process d'un process pour lequel le thermomètre (1) est utilisé, un paramètre ou une autre grandeur caractéristique concernant le thermomètre (1), une autre grandeur de process du produit (M), notamment une vitesse d'écoulement, une condition ambiante, notamment une température ambiante ou une influence de l'environnement pour le thermomètre (1), ou une information sur le produit (M), notamment une propriété physique et/ou chimique du produit (M), sont pris en compte.

**10.** Procédé selon au moins l'une des revendications précédentes,
pour lequel au moins un coefficient (K) du modèle (MOD) est déterminé de manière analytique ou numérique.

**11.** Procédé selon au moins l'une des revendications précédentes,
pour lequel au moins un coefficient (K) est déterminé à l'aide d'une mesure de référence au moyen d'un dispositif de référence dans un produit de référence.

Fig. 1

Fig. 2a

Fig. 2b

Fig. 2

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 102014119593 A1
- DE 102018116309